# EUROPEAN PATENT APPLICATION

(11) **EP 4 487 974 A1**
(43) Date of publication of application: **08.01.2025**
(21) Application number: 22928883.2
(22) Date of filing: 14.11.2022
(51) Int. Cl.: B21D 22/28, B21D 22/20, B21D 24/00, B21D 37/16, B21D 51/26

(54) **SQUARE CAN MANUFACTURING METHOD AND PRESS**

(30) Priority: 28.02.2022 JP 2022029038
(71) Applicant: Toyo Seikan Co., Ltd., Tokyo 141-8640 (JP)
(72) Inventor: TSUKADA, Kazuhiko, Yokohama-shi, Kanagawa 230-0001 (JP); OOHORI, Kei, Yokohama-shi, Kanagawa 230-0001 (JP); OSAFUNE, Tatsuya, Yokohama-shi, Kanagawa 230-0001 (JP); OGAWA, Yousuke, Yokohama-shi, Kanagawa 230-0001 (JP); NAKAGAWA, Takanori, Yokohama-shi, Kanagawa 230-0001 (JP); ONUKI, Ryuji, Yokohama-shi, Kanagawa 230-0001 (JP); HANADA, Ryosuke, Yokohama-shi, Kanagawa 230-0001 (JP)
(74) Representative: Haseltine Lake Kempner LLP
(86) International application number: PCT/JP2022/042163
(87) International publication number: WO 2023/162365

(57) **Abstract**

An object of the present invention is to provide a manufacturing method that increases production efficiency. A method for manufacturing a can by deep drawing using a press machine, the can being a quadrilateral can having a rectangular opening, the method including a control step of controlling a temperature of a punch and/or a temperature of a die by supplying a heat medium as a fluid to a flow path provided inside the punch and/or the die.

## Description

### Technical Field

The present invention relates to a method for manufacturing a metal can by deep drawing and to a press machine for deep-drawing a metal can.

### Background Art

In the related art, with respect to deep drawing of a metal can, various techniques for improving the dimensional preciseness of a deep-drawn metal can are known.

One of the techniques is to supply a lubricating coolant to a punch or a workpiece to reduce friction and prevent thermal influence.

### Citation List

### Patent Literature

Patent Document 1: JP H04-231119 A

### Summary of Invention

### Technical Problems

When a metal can is manufactured by deep drawing using a press machine, the temperature of the can increases due to heat generated during the deep drawing, and as the temperature returns to room temperature, the dimensions of the can are reduced due to the influence of thermal expansion.

In addition, since a die itself is also thermally expanded due to temperature, while the die is cold and thus is small in size at the start of production, the temperature rises and the dimensions of the die increase as the production proceeds.

This causes a problem of dimensional errors in the formed can and, in particular, in manufacturing a quadrilateral can having a rectangular cross section such as a battery case, dimensional variations due to heat become large because such a can is long in the long side direction thereof. In addition, since the precision requirement for a long-side dimension is strict, cans having unstable dimensions produced immediately after the start of production must be discarded, leading to a problem that the number of cans to be discarded increases.

In the technique of supplying a coolant to a punch or a workpiece as described in Patent Document 1, a large amount of the coolant is required, and further, use of the coolant requires degreasing and cleaning of formed cans. As a result, the number of steps increases, and environmental measures such as treatment of waste water generated by the cleaning are required, causing problems in terms of efficiency and environmental load.

As described above, an object of the present invention is to provide a manufacturing method that increases production efficiency.

Another object of the present invention is to provide an easy-to-use press machine.

### Solution to Problems

A method for manufacturing a can by deep drawing using a press machine according to the present invention, in which the can is a quadrilateral can having a rectangular opening, solves the above-described problems by supplying a heat medium as a fluid to a flow path provided inside a punch and/or a die to control a temperature of the punch and/or a temperature of the die.

To solve the above-described problems, a press machine for manufacturing a can by deep drawing according to the present invention includes a punch, a die, and a controller, wherein the punch and/or the die performs deep drawing of a quadrilateral can having a rectangular opening, the punch and/or the die includes a flow path for a heat medium as a fluid, and the controller controls a temperature and/or a flow of the heat medium flowing through the punch and/or the die.

### Advantageous Effects of Invention

With the above-described configuration according to the present invention, it is possible to provide an easy-to-use press machine which can improve production efficiency.

### Brief Description of Drawings

FIG. 1 is a diagram illustrating a press machine according to an embodiment of the present invention.
FIG. 2 is a diagram illustrating a forming process by the press machine according to the embodiment of the present invention.
FIG. 3 is a schematic diagram illustrating a punch of the press machine according to the embodiment of the present invention.
FIG. 4 is a block diagram of a system for cooling the press machine according to the embodiment of the present invention.
FIG. 5 is a block diagram of a modified example of the system for cooling the press machine according to the embodiment of the present invention.
FIG. 6 is a block diagram of a system for heating and cooling a press machine according to another embodiment of the present invention.
FIG. 7 is a schematic diagram illustrating a punch of a press machine according to still another embodiment of the present invention.
FIG. 8 is a graph showing a relationship between number of produced cans and long-side dimension in an experimental example of the present invention.
FIG. 9 is a graph showing a part of the graph of FIG. 8 in an enlarged manner.

Hereinafter, embodiments of the present invention will be described with reference to the drawings. In the following description, the same reference numerals in different drawings denote elements having the same function, and redundant descriptions with regard to each drawing are omitted as appropriate.

Hereinafter, embodiments of the present invention will be described with reference to the drawings.

### <Embodiment 1>

Hereinafter, in the present invention, an embodiment of a method for manufacturing a can, for example, a battery cell case of a lithium ion battery, by deep drawing using a press machine 1 and the press machine 1 used in the method will be described with reference to the accompanying drawings.

In the present embodiment, a lithium ion battery cell case which is a quadrilateral can having a rectangular opening is manufactured.

### <Press Machine>

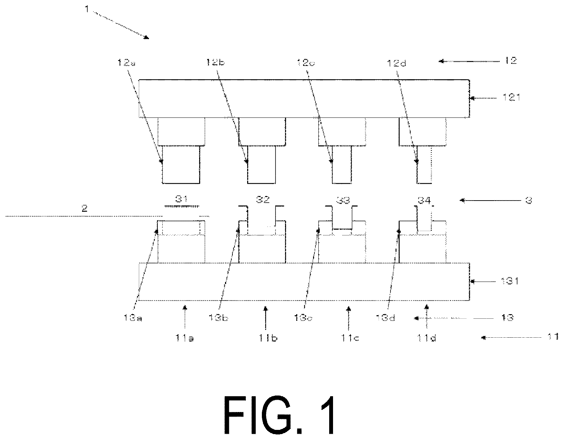

FIG. 1 is a diagram illustrating a press machine 1 according to an embodiment of the present invention.

The press machine 1 of the present embodiment is a so-called transfer-press machine, and includes a first processing stage 11a, a second processing stage 11b, a third processing stage 11c, and a fourth processing stage 11d arranged in a row as a processing stage 11 as illustrated in FIG. 1. The processing stage 11 includes a punch 12 and a die 13, and the first to fourth processing stages 11a to 11d include first to fourth punches 12a to 12d and first to fourth dies 13a to 13d facing each other, respectively.

The first to fourth punches 12a to 12d are held by a slide 121 and arranged in a row at predetermined intervals, and the first to fourth dies 13a to 13d are held by a bolster 131 and arranged in a row at predetermined intervals. A transfer device (not illustrated) including four pairs of oppositely-arranged fingers is disposed across the first to fourth processing stages 11a to 11d, and moves a workpiece 3 to the next processing stage 11 each time the first to fourth punches 12a to 12d held by the slide 121, which moves vertically, move up and down.

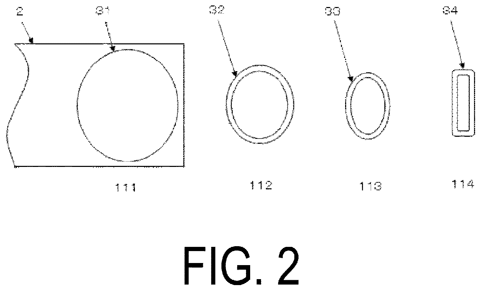

FIG. 2 is a diagram illustrating a forming process by the press machine 1 according to the embodiment of the present invention.

Next, the forming process will be described with reference to FIG. 1.

The first processing stage 11a is a blanking stage. In the blanking stage, a blanking step 111 is performed in which a blank 31 is cut out from a sheet 2 made of aluminum by blanking using a blanking punch as the first punch 12a and a blanking die as the first die 13a.

The second processing stage 11b and the third processing stage 11c are drawing stages. In the drawing stages, the blank 31 cut out in the blanking step 111 is formed into a cup shape. In the second processing stage 11b, a first forming step 112 is performed in which a first cup 32 having a wide elliptical shape is formed. Subsequently, in the third processing stage 11c, a second forming step 113 is performed in which a second cup 33 having a narrow elliptical shape is formed.

The fourth processing stage 11d is a drawing and ironing stage which is a final step. Subsequent to the drawing stages, a third forming step 114 is performed in which the second cup 33 is formed into a third cup 34 having a rectangular shape and the thickness of the formed cup is adjusted to a predetermined thickness.

Note that the types of processing stages and the number of processing stages included in the press machine 1 as the processing stage 11 can be changed as appropriate depending on the type, shape, size, and the like of products to be manufactured. In addition, the press machine 1 does not necessarily include all of the blanking stage, the drawing stage, and the drawing and ironing stage, and may additionally include necessary processing stages 11 such as a coining stage and a reforming stage. For example, the second processing stage 11b and the third processing stage 11c may be a drawing and ironing stage, or the fourth processing stage 11d may be a drawing stage.

### <Punch>

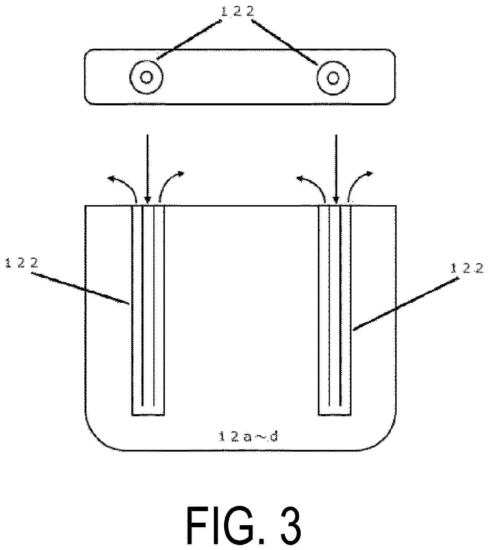

FIG. 3 is a schematic diagram illustrating the punch 12 of the press machine 1 according to the embodiment of the present invention.

In the press machine 1 of the present embodiment, flow paths 122 through which cold water CW (cold heat medium) as a heat medium for cooling the first to fourth punches 12a to 12d passes are formed inside each of the first to fourth punches 12a to 12d as illustrated in FIG. 3. In order to reduce dimensional errors of the can, it is particularly important to provide the flow paths 122 in the fourth punch 12d as the punch for the fourth processing stage 11d that is the final drawing stage or the final drawing and ironing stage among the drawing stage and the drawing and ironing stage.

In each of the first to fourth punches 12a to 12d having a rectangular shape in a top view (cross-sectional shape parallel to the opening surface of the can), the flow paths 122 are formed along the long side of the punch at two locations.

Note that the number of the flow paths 122 can be appropriately designed depending on the length in the long-side direction of the rectangular shape, and can be only one, or three or more. However, it is preferable to dispose a plurality of flow paths so that the punch 12 can be more uniformly cooled.

In addition to the double tube shape illustrated in FIG. 3, the flow paths 122 may have other known shapes such as U-shaped in a side cross section as appropriate.

### <Cooling Unit and Controller>

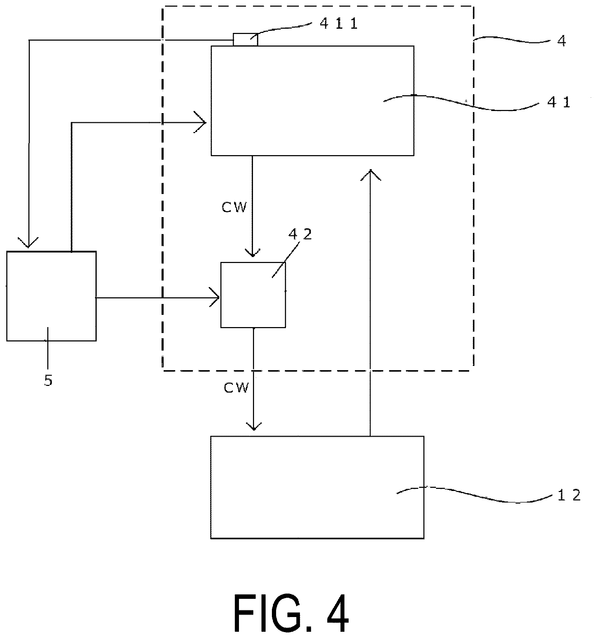

FIG. 4 is a block diagram of a system for cooling the press machine 1 according to the embodiment of the present invention.

The cooling unit 4 for cooling the punch 12 will be described with reference to FIG. 4 which is a block diagram of a system for cooling the press machine 1 according to the embodiment of the present invention.

The cooling unit 4 includes a water cooler 41 and a pump 42. The cold water CW (cold heat medium) is supplied from the water cooler 41 to the punch 12 by the pump 42, and is returned to the water cooler 41 through the flow paths 122 in the punch 12. The water cooler 41 includes a temperature sensor 411, and is controlled by a controller 5 such that the cold water CW (cold heat medium) has a predetermined temperature (about 10°C to 25°C) of, for example, 20°C.

The pump 42 is controlled by the controller 5 so as to have a predetermined flow rate.

Note that the heat medium is not limited to water, and may be a liquid such as oil or coolant liquid, or a substance having fluidity such as gas.

Accordingly, the cold water CW (cold heat medium) as the heat medium is maintained at the predetermined temperature by the water cooler 41 and supplied to the flow paths 122 in the punch 12 at the predetermined flow rate, thereby cooling the punch 12 and stabilizing the temperature of the punch 12. Needless to say, the predetermined temperature and the predetermined flow rate of the cold water CW (cold heat medium) can be appropriately set.

The cooling unit 4 may be installed either inside the press machine 1 or outside the press machine 1. In addition, the controller 5 may be a device that is installed in the cooling unit 4 and controls only the cooling unit 4, or may be configured as a functional part of a control device that controls the entire press machine 1, that is, one module of a control program. The control device for the entire press machine 1 may be installed either inside the press machine 1 or outside the press machine 1, or may be installed remotely from the press machine 1 through a communication network with the press machine 1. Further, all the functions (programs) of the controller 5 may be arranged in a concentrated manner, may be arranged in a distributed manner at a plurality of locations, or may be configured as a control system capable of controlling a plurality of press machines 1.

### <Manufacturing Method>

A method for manufacturing a battery cell case using the press machine 1 described above, particularly, the temperature control (control step) for the punch 12 will be described.

In the press machine 1, heat is generated by the contact between the punch 12 and the workpiece 3. In particular, in the drawing step and the drawing and ironing step, a large amount of heat is generated and the temperatures of the punch 12 and the workpiece 3 rise. The punch 12 and the workpiece 3 are made of metal, and thus are thermally expanded by the temperature rise. After the processing, the temperature of the workpiece 3 is lowered, and the workpiece 3 is contracted from a thermally expanded state, and thus the dimensions of the workpiece 3 are changed due to the expansion and contraction. When the temperature of the workpiece 3 is not stable, the amount of thermal contraction of the can after the processing is not stable and the final dimensions are also not stable, which increases dimensional errors.

Thus, in order to stabilize the temperature of the workpiece 3, the cold water CW (cold heat medium) is supplied to the flow paths 122 in the punch 12. In order to stabilize the temperature of the punch 12, the water as the heat medium is controlled to be, for example, 20°C, and is supplied at a flow rate required to cool the punch 12 and stabilize the temperature thereof (cooling step).

In addition, since the punch 12 is also thermally expanded due to temperature, while the punch 12 is cold and thus is small in size at the start of production, the punch 12 becomes large in size due to temperature rise as the production progresses. However, the dimensional errors of the formed can due to this can be suppressed.

When a value obtained by dividing the long-side dimension by the short-side dimension of the rectangular opening of the can is large, a difference between an error in the long-side dimension and an error in the short side dimension becomes large, and the adverse effect of the dimensional variations of the can becomes large as a whole. Then, the larger the value obtained by dividing the long-side dimension by the short-side dimension is, the larger an effect of suppressing the dimensional errors by the temperature control of the punch 12 is. The effect can be obtained when the value obtained by dividing the long-side dimension by the short-side dimension is 2 or more, but the effect is large when the value obtained by dividing the long-side dimension by the short-side dimension is 5 or more, the effect is larger when the value is 7 or more, and the effect is further larger when the value is 10 or more.

### <Modified Example 1>

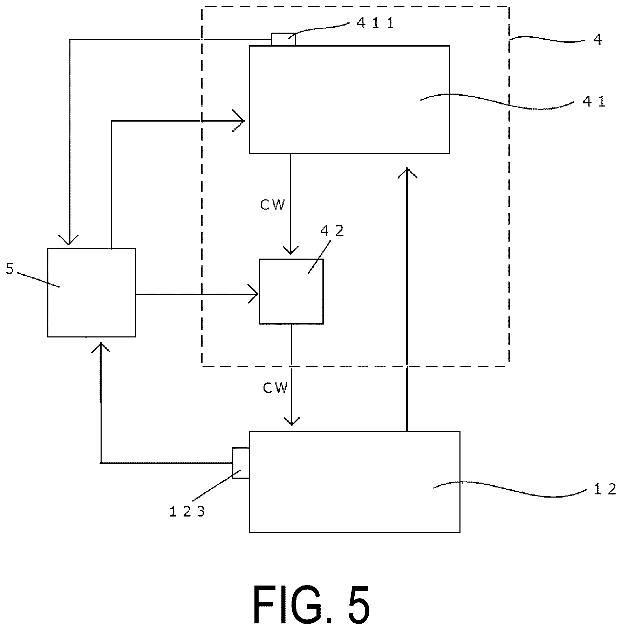

(1) The press machine 1 described above controls the cold water CW (cold heat medium) to a predetermined temperature and does not directly control the temperature of the punch 12. However, as illustrated in FIG. 5, there may be a configuration in which the punch 12 is provided with a temperature sensor 123, and the temperature and the flow rate of the cold water CW (cold heat medium) is controlled by the controller 5 such that the temperature of the punch 12 has a predetermined temperature. This enables more precise adjustment of the temperature of the workpiece 3.
(2) In the press machine 1 described above, it is effective to control the temperature of the punch 12 having a large area of contact with the workpiece 3 to stabilize the temperature of the workpiece 3, and thus only the punch 12 is cooled. However, the temperature of the die 13 also rises in a similar manner. Thus, by providing the flow paths 122 also in the die 13 and supplying the cold water CW (cold heat medium) to the die 13, it is possible to cool the die 13 and further stabilize the temperature of the workpiece 3. As in the case of the punch 12, it is particularly important to provide the flow paths 122 in the fourth die 13d as the die for the fourth processing stage 11d that is the final drawing stage or the final drawing and ironing stage in order to reduce the dimensional errors of the can.
(3) In the press machine 1 described above, the temperature and the flow rate of the cold water CW (cold heat medium) are controlled by the cooling unit 4 and the controller 5, but, alternatively, only one of the temperature and the flow rate may be controlled.
(4) The press machine 1 described above processes the workpiece 3 made of aluminum. Alternatively, the workpiece 3 made of another metal such as stainless steel may be processed. Further, the workpiece 3 having a laminated structure in which a metal is coated with resin or the like may be processed.
(5) The press machine 1 described above manufactures a can having a rectangular opening. Alternatively, a can having a square opening or a can having another shape not limited to a quadrangular shape such as a circular can and an elliptical can may be manufactured. Needless to say, the effect of suppressing dimensional errors that can be achieved by the first embodiment can also be achieved in manufacturing a can having another shape.

### <Second Embodiment>

In the first embodiment, the punch 12 with an increased temperature is cooled by the cold water CW (cold heat medium) which is a heat medium in order to stabilize the temperature.

In addition to this, in the second embodiment, the punch 12 in a low temperature state is heated by hot water HW (hot heat medium) which is a heat medium, and the basic configurations of the press machine 1, the punch 12, the die 13, and the like are the same as those in the first embodiment.

### <Heating Cooling Unit, and Controller>

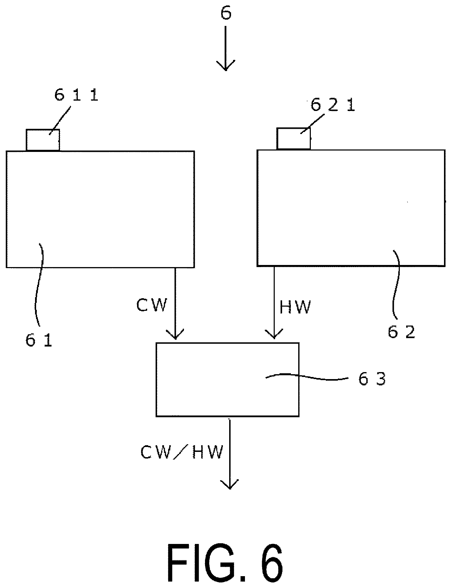

FIG. 6 is a block diagram of a system for heating and cooling the press machine 1 according to another embodiment of the present invention.

As illustrated in FIG. 6, a heating cooling unit 6 including a water cooler 61 and a water heater 62 is used instead of the cooling unit 4 of the first embodiment. The water cooler 61 and the water heater 62 are provided with temperature sensors 611 and 621, respectively, and are controlled by the controller 5 such that the cold water CW (cold heat medium) has a predetermined temperature (about 10°C to 25°C) of, for example, 20°C, and the hot water HW (hot heat medium) has a predetermined temperature (about 35°C to 100°C) of, for example, 70°C.

The heating cooling unit 6 is provided with a switching unit 63 that switches between the cold water CW (cold heat medium) and the hot water HW (hot heat medium), and is switched according to whether the punch 12 is heated or cooled.

The cold water CW (cold heat medium) or the hot water HW (hot heat medium) selected by the switching unit 63 is controlled by the controller 5 so as to flow at a predetermined flow rate from the pump 42, supplied to the punch 12, and returned to the water cooler 61 or the water heater 62 through the flow paths 122 in the punch 12.

Note that the heat medium is not limited to water, and may be a liquid such as oil or coolant liquid, or a substance having fluidity such as gas.

Accordingly, the cold water CW (cold heat medium) and the hot water HW (hot heat medium), which are heat media, are maintained at the predetermined temperature by the water cooler 61 and the water heater 62, respectively, and are supplied to the flow paths 122 in the punch 12 at the predetermined flow rate to cool the punch 12 and stabilize the temperature of the punch 12. Needless to say, the predetermined temperature and the predetermined flow rate of the cold water CW (cold heat medium) and the hot water HW (hot heat medium) can be appropriately set.

The heating cooling unit 6 may be installed either inside the press machine 1 or outside the press machine 1. In addition, the controller 5 may be a device that is installed in the heating cooling unit 6 and controls only the heating cooling unit 6, or may be configured as a part of a control device that controls the entire press machine 1, that is, one module of a control program. The control device for the entire press machine 1 may be installed either inside the press machine 1 or outside the press machine 1, or may be installed remotely from the press machine 1 through a communication network with the press machine 1. Further, all the functions (programs) of the controller 5 may be arranged in a concentrated manner, may be arranged in a distributed manner at a plurality of locations, or may be configured as a control system capable of controlling a plurality of press machines 1.

### <Manufacturing Method>

A method for manufacturing a battery cell case using the press machine 1 described above, particularly, the temperature control (control step) for the punch 12 will be described.

Since the cooling of the punch 12 is the same as that in the first embodiment, the heating will be described.

In general, since the body of the press machine and the die such as the punch are cold immediately after the start of production, the temperature of the workpiece 3 during processing and the temperature of the can immediately after the processing are low, and as production volume increases, the temperature of the workpiece 3 during the processing and the temperature of the can immediately after the processing increase due to heat generation during the processing and become constant at a certain temperature. Thus, there is a tendency that the final dimensions of the can becomes large immediately after the start of production, and the final dimensions of the can becomes small as production volume increases.

In order to stabilize the temperature of the workpiece 3 early after the start of production, it is desirable to raise the temperature of the punch 12 before the start of production. To that end, as the hot water HW (hot heat medium) which is the heat medium, the hot water HW (hot heat medium) at 70°C, for example, is supplied to the flow paths 122 of the punch 12 by the switching unit 63 before the start of production (heating step).

The timing of switching from the cold water CW (cold heat medium) to the hot water HW (hot heat medium) is the timing of switching from the cold water CW (cold heat medium) to the hot water HW (hot heat medium) in the flow paths 122 of the punch 12, and is adjusted up to 300 seconds after the start of production, for example. Depending on a specific production process, the switching may be caused before the start of production. Needless to say, the actual switching timing by the switching unit 63 is controlled to be earlier than the switching timing in the flow paths 122 of the punch 12 in consideration of the time required for the heat medium to reach the flow paths 122 of the punch 12 from the switching unit 63.

In addition, since the punch 12 itself is also thermally expanded due to temperature, while the punch 12 is cold and thus is small in size immediately after the start of production, the punch 12 becomes larger in size due to temperature rise as the production progresses. However, the dimensional errors of the can after the formation due to this can also be suppressed.

Then, after a lapse of a certain period of time from the start of production, the cold water CW (cold heat medium) at 20°C, for example, is supplied to the flow paths 122 in the punch 12 as the cold water CW (cold heat medium) which is the heat medium by the switching unit 63 to cool the punch 12 and stabilize the temperature (cooling step), as in the first embodiment.

When a value obtained by dividing the long-side dimension by the short-side dimension of the rectangular opening of the can is large, a difference between an error in the long-side dimension and an error in the short side dimension becomes large, and the adverse effect of the dimensional variations of the can becomes large as a whole. Then, the larger the value obtained by dividing the long-side dimension by the short-side dimension is, the larger an effect of suppressing the dimensional errors by the temperature control of the punch 12 is. The effect can be obtained when the value obtained by dividing the long-side dimension by the short-side dimension is 2 or more, but the effect is large when the value obtained by dividing the long-side dimension by the short-side dimension is 5 or more, the effect is larger when the value is 7 or more, and the effect is further larger when the value is 10 or more.

### <Modified Example 2>

(1) In the press machine 1 described above, the cold water CW (cold heat medium) is switched to the hot water HW (hot heat medium) at a predetermined switching timing. However, it is also conceivable that the supply of the cold water CW (cold heat medium) is stopped and, after a predetermined period of time has passed, switching to the hot water HW (hot heat medium) is caused to start the supply of the hot water HW.
(2) The press machine 1 described above controls the cold water CW (cold heat medium) or the hot water HW (hot heat medium) to a predetermined temperature and does not directly control the temperature of the punch 12. However, as illustrated in FIG. 5, there may be a configuration in which the punch 12 is provided with the temperature sensor 123, and the temperature and the flow rate of the cold water CW (cold heat medium) or the hot water HW (hot heat medium) is controlled by the controller 5 such that the temperature of the punch 12 becomes a predetermined temperature. This enables more precise adjustment of the temperature of the workpiece 3.
(3) In the press machine 1 described above, it is effective to control the temperature of the punch 12 having a large area of contact with the workpiece 3 to stabilize the temperature of the workpiece 3, and thus only the punch 12 is cooled or heated. However, by providing the flow paths 122 also in the die 13 and supplying the cold water CW (cold heat medium) or the hot water HW (hot heat medium) to the die 13, it is possible to cool or heat the die 13 and further stabilize the temperature of the workpiece 3. As in the case of the punch 12, it is particularly important to provide the flow paths 122 in the fourth die 13d as the die for the fourth processing stage 11d that is the final drawing stage or the final drawing and ironing stage in order to reduce the dimensional errors of the can.
(4) In the press machine 1 described above, the temperature and the flow rate of the cold water CW (cold heat medium) or the hot water HW (hot heat medium) are controlled by the heating cooling unit 6 and the controller 5, but, alternatively, only one of the temperature and the flow rate may be controlled.
(5) The press machine 1 described above processes the workpiece 3 made of aluminum. Alternatively, the workpiece 3 made of another metal such as stainless steel may be processed. Further, the workpiece 3 having a laminated structure in which a metal is coated with resin or the like may be processed.
(6) The press machine 1 described above manufactures a can having a rectangular opening. Alternatively, a can having a square opening or a can having another shape not limited to a quadrangular shape such as a circular can and an elliptical can may be manufactured. Needless to say, the effect of suppressing dimensional errors that can be achieved by the second embodiment can also be achieved in manufacturing a can having another shape.

### Third Embodiment

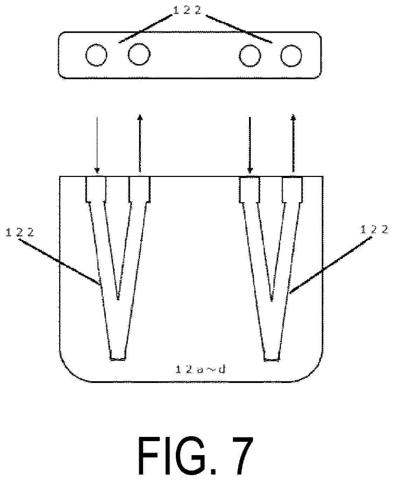

FIG. 7 is a schematic diagram illustrating the punch 12 of the press machine 1 according to still another embodiment of the present invention.

Another embodiment of the shape of the flow paths 122 of the punch 12 will be described.

In the press machine 1 of the present embodiment, flow paths 122 through which the cold water CW (cold heat medium) as the heat medium for cooling the first to fourth punches 12a to 12d or the hot water HW (hot heat medium) as the heat medium for heating the first to fourth punches 12a to 12d passes are formed inside each of the first to fourth punches 12a to 12d as illustrated in FIG. 7. In order to reduce dimensional errors of the can, it is particularly important to provide the flow paths 122 in the fourth punch 12d as the punch for the fourth processing stage 11d that is the final drawing stage or the final drawing and ironing stage among the drawing stage and the drawing and ironing stage.

In each of the first to fourth punches 12a to 12d having a rectangular shape in a top view (cross-sectional shape parallel to the opening surface of the can), the flow paths 122 are formed along the long side of the punch at two locations.

Note that the number of the flow paths 122 can be appropriately designed depending on the length in the long-side direction of the rectangular shape, and can be only one, or three or more. However, it is preferable to dispose a plurality of flow paths so that the punch 12 can be more uniformly cooled.

In the third embodiment, each of the flow paths 122 is provided so as to have a V-shaped side cross section as illustrated in FIG. 7. This shape has an advantage of increasing the contact area to the cold water CW (cold heat medium) or the hot water HW (heat medium) as the heat medium and the punch 12 to increase the cooling efficiency or the heating efficiency for the punch 12, as well as enabling the flow path 122 having a V shape to be easily formed only by making two holes from the top surface of the punch 12.

### <Experimental Example>

By the press machine 1 of the present invention, in processing an aluminum battery cell case having a rectangular opening with the press machine 1, variations in the long-side dimension of the battery cell case after the processing in a case of supplying the cold water CW (cold heat medium) at 20°C to the flow paths 122 of the punch 12 and variations in the long-side dimension of the battery cell case after the processing in a case of supplying the hot water HW (hot heat medium) before the start of manufacturing and switching to the cold water CW (cold heat medium) at the start of manufacturing were measured. The battery cell case has a long-side dimension of 100 mm and a short-side dimension of 10 mm, and a value obtained by dividing the long-side dimension by the short-side dimension is 10.

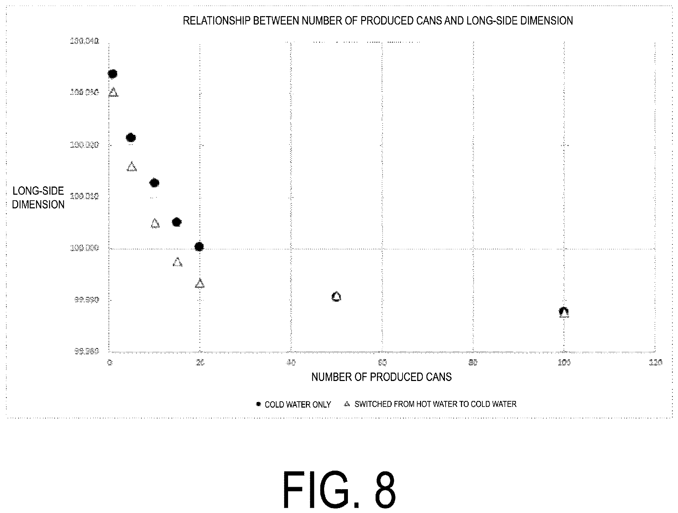

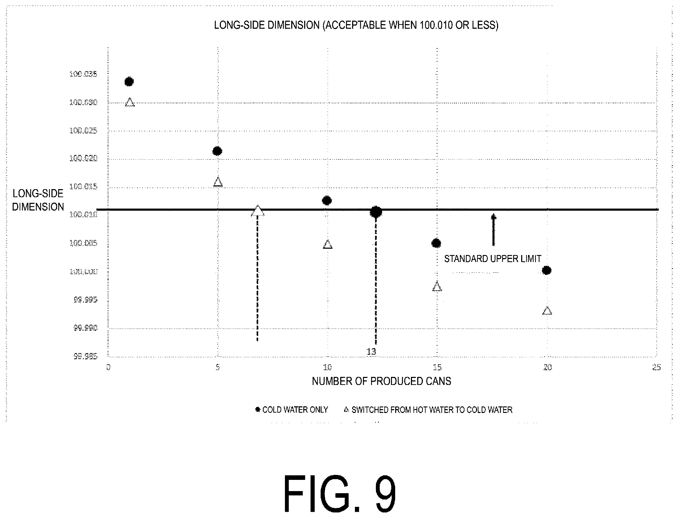

As illustrated in FIG. 8 which is a graph showing the relationship between the number of produced cans and the long-side dimension in the experimental example of the present invention, it can be seen that the number of cans produced until the stabilization of the dimensions was smaller when the hot water HW (hot heat medium) was switched to the cold water CW (cold heat medium). Further, as illustrated in FIG. 9 which is a graph showing a part of the graph of FIG. 8 in an enlarged manner, it can be seen that the number of cans produced until the long-side dimensions became equal to or less than a standard upper limit was also reduced.

Although the embodiments according to the present invention have been described in detail with reference to the drawings, the specific configurations are not limited to these embodiments, and design changes and the like without departing from the gist of the present invention are also included in the present invention.

In addition, the above-described embodiments can be combined with each other by applying techniques to each other as long as there is no particular contradiction or problem in the purpose, configuration, and the like.

Needless to say, the present invention also includes an invention in which the first to third embodiments are combined.

### Industrial Applicability

The present invention can be suitably used in the field of manufacturing cans that are environmentally friendly while maintaining processability and forming stability.

### Reference Signs List

- 1: Press machine
- 11: Processing stage
- 11a to 11d: First to fourth processing stages
- 111: Blanking step
- 112: First forming step
- 113: Second forming step
- 114: Third forming step
- 12: Punch
- 12a to 12d: First to fourth punches
- 121: Slide
- 122: Flow path
- 123: Temperature sensor
- 13: Die
- 13a to 13d: First to fourth dice
- 131: Bolster
- 2: Sheet
- 3: Workpiece
- 31: Blank
- 32: First cup
- 33: Second cup
- 34: Third cup
- 4: Cooling unit
- 41: Water cooler
- 411: Temperature sensor
- 42: Pump
- 5: Controller
- 6: Heating cooling unit
- 61: Water cooler
- 611: Temperature sensor
- 62: Water heater
- 621: Temperature sensor
- 63: Switching unit
- CW: Cold water
- HW: Hot water

## Claims

1. A method for manufacturing a can by deep drawing using a press machine, the can being a quadrilateral can having a quadrilateral opening, the method comprising:
controlling a temperature of a punch and/or a temperature of a die by supplying a heat medium as a fluid to a flow path provided inside the punch and/or the die.

2. The method for manufacturing a can according to claim 1, wherein
the controlling includes heating the punch and/or the die by supplying a hot heat medium as the heat medium to the flow path in advance before a start of production by the press machine.

3. The method for manufacturing a can according to claim 2, wherein
the controlling further includes cooling the punch and/or the die by switching to a cold heat medium as the heat medium.

4. The method for manufacturing a can according to claim 3, wherein
timing of switching to the cold heat medium is up to 300 seconds after the start of production.

5. The method for manufacturing a can according to any one of claims 1 to 4, wherein
the heat medium is a hot heat medium and/or a cold heat medium,
the hot heat medium is at 35°C to 100°C, and
the cold heat medium is at 10°C to 25°C.

6. The method for manufacturing a can according to any one of claims 1 to 5, wherein
the deep drawing includes a plurality of steps of drawing and/or drawing and ironing, and
the punch and/or the die, for which the temperature of the punch and/or the temperature of the die are/is controlled, are/is the punch and/or the die used in a final step of the plurality of steps of drawing and/or drawing and ironing.

7. The method for manufacturing a can according to any one of claims 1 to 6, wherein
the can is an aluminum can.

8. The method for manufacturing a can according to claim 7, wherein
the quadrilateral can has an opening having a rectangular shape, and
a value obtained by dividing a long-side dimension by a short-side dimension of the rectangular shape is 2 or more.

9. The method for manufacturing a can according to any one of claims 1 to 8, wherein
the flow path provided inside the punch is formed in a V shape.

10. The method for manufacturing a can according to claim 9, wherein
the punch has a rectangular cross-sectional shape parallel to an opening surface of the can, and
the flow path having the V shape is arranged at a plurality of locations in a long-side direction of the rectangular cross-sectional shape.

11. A press machine for deep drawing a can, comprising:
a punch;
a die; and
a controller, wherein
the punch and/or the die are/is configured to perform deep drawing of a quadrilateral can having a rectangular opening,
the punch and/or the die include therein a flow path of a heat medium as a fluid, and
the controller is configured to control a temperature and/or a flow of the heat medium flowing through the punch and/or the die.

12. The press machine according to claim 11, wherein
the controller controls a temperature and/or a flow of a hot heat medium as the heat medium such that the punch and/or the die are/is heated by supplying the hot heat medium to the flow path in advance before a start of production by the press machine.

13. The press machine according to claim 12, wherein
the controller controls a temperature and/or a flow of a cold heat medium as the heat medium such that the punch and/or the die are/is cooled by switching to the cold heat medium.

14. The press machine according to claim 13, wherein
the controller controls timing of switching to the cold heat medium up to 300 seconds after the start of production.

15. The press machine according to any one of claims 11 to 14, wherein
the heat medium is a hot heat medium and/or a cold heat medium, and
the controller performs control such that the hot heat medium is in a range of 35°C to 100°C and the cold heat medium is in a range of 10°C to 25°C.

16. The press machine according to any one of claims 11 to 15, wherein
the deep drawing is configured to perform a plurality of steps of drawing and/or drawing and ironing, and
the controller controls a temperature and/or a flow of the heat medium flowing through the punch and/or the die used in a final step of the plurality of steps of drawing and/or drawing and ironing in the deep drawing.

17. The press machine according to any one of claims 11 to 16, wherein
the can is an aluminum can.

18. The press machine according to claim 17, wherein
the quadrilateral can has an opening having a rectangular shape, and
a value obtained by dividing a long-side dimension by a short-side dimension of the rectangular shape is 2 or more.

19. The press machine according to any one of claims 11 to 18, wherein
the flow path inside the punch is formed in a V shape.

20. The press machine according to claim 19, wherein
the punch has a rectangular cross-sectional shape parallel to an opening surface of the can, and
the flow path having the V shape is arranged at a plurality of locations in a long-side direction of the rectangular cross-sectional shape.
